# EUROPÄISCHE PATENTANMELDUNG

(11) **EP 1 109 120 A2**
(43) Veröffentlichungstag der Anmeldung: **20.06.2001**
(21) Anmeldenummer: 00125204.8
(22) Anmeldetag: 22.11.2000
(51) Int. Cl.: G06F 17/60

(54) **Verfahren und Vorrichtung zur Handhabung von Daten eines Produktes**

(30) Priorität: 14.12.1999 DE 19960171
(71) Anmelder: Volkswagen Aktiengesellschaft, 38436 Wolfsburg (DE)
(72) Erfinder: Boroske, Manfred, 31234 Edemissen (DE); Schatz, Markus Dipl.-Ing., 38165 Lehre (DE); Pundt, Dieter Dipl.-Ing., 38547 Calberlah (DE); Wester, Peter Dipl.-Ing., 49163 Bohmte (DE)

(57) **Zusammenfassung**

Die Erfindung betrifft ein Verfahren und eine Vorrichtung zur Handhabung von Daten eines Produktes, wobei das Produkt aus mehreren spezifisch geformten Einzelteilen besteht, wobei bei dem Verfahren die Daten über eine Einrichtung zur Eingabe von Daten in eine Verarbeitungseinrichtung eingegeben und in einer der elektronischen Verarbeitungseinrichtung zugeordneten Speichereinrichtungen abgelegt werden, dadurch gekennzeichnet, daß die Daten Informationen über die chemischen Elemente der Einzelteile enthalten und in der Verarbeitungseinrichtung eine Summe der Informationen bezüglich des Produktes oder einer Untermenge von Einzelteilen hiervon ermittelt wird.

## Beschreibung

Die Erfindung betrifft ein Verfahren und eine Vorrichtung zur Handhabung von Daten eines Produktes, wobei das Produkt aus mehreren spezifisch geformten Einzelteilen besteht.

Moderne Maschinen oder Geräte bestehen in zunehmenden Maße aus einer steigenden Anzahl von Einzelteilen, was sowohl produktionstechnisch als auch lagertechnisch zu Problemen führt. Daher ist man dazu übergegangen, die Stücklisten datentechnisch mittels elektronischen Datenverarbeitungseinrichtungen zu erfassen. Die zunehmende Komplexität solcher Produkte führt jedoch dazu, daß die Produkte einer starken Arbeitsteilung in Entwicklung und Produktion unterworfen sind. Dies führt dazu, daß kaum noch jemand vollständig über ein Produkt in all seinen Einzelteilen Kenntnis hat. Verstärkt wird dieses Problem, daß zunehmend spezielle Werkstoffe Anwendung finden, die meist einzelteilspezifisch ausgewählt werden.

Aus ökologischen Gründen wird verstärkt gefordert, daß die hergestellten Produkte zumindest teilweise recyclebar sind. Des weiteren wird gefordert, daß der Anteil von problematischen Werkstoffen wie beispielsweise Schwermetallen reduziert wird.

Der Erfindung liegt daher das technische Problem zugrunde, ein Verfahren und eine Vorrichtung zur Handhabung von Produkten zu schaffen, mittels derer die Anforderungen hinsichtlich Recycling und/oder Vermeidung von Gefahrenstoffen verbessert werden.

Die Lösung des technischen Problems ergibt sich durch die Gegenstände mit den Merkmalen der Patentansprüche 1 und 11. Weitere vorteilhafte Ausgestaltungen der Erfindung ergeben sich aus den Unteransprüchen.

Hierzu enthalten die Daten der Einzelteile Informationen über die chemischen Elemente und/oder Verbindungen, aus denen sich das Einzelteil zusammensetzt und/oder der spezifischen Eigenschaften, beispielsweise den Rezyklatanteil, wobei über die Verarbeitungseinrichtung eine Summe der Informationen bezüglich des Produktes oder einer Untermenge von Einzelteilen ermittelbar ist. Dadurch kann ermittelt werden, welche chemischen Elemente und/oder Verbindungen überhaupt und wo diese in dem Produkt vorkommen.

In einer weiteren bevorzugten Ausführungsform werden die Einzelteile ermittelt, in denen ein definiertes chemisches Element auftritt. Dadurch kann eine gezielte Substitution von chemischen Elementen durchgeführt werden. Hierzu enthalten die Daten der Einzelteile Angaben über die Masse und/oder das Volumen des Einzelteils, so daß bei Kenntnis der prozentualen Anteile verschiedener Elemente des Einzelteils das Gesamtgewicht eines chemischen Elementes an dem Produkt ermittelbar ist. Durch die Kenntnis der Gesamtmasse und der Verteilung über das Produkt kann nun gezielt substituiert werden, um beispielsweise das Gesamtgewicht eines Gefahrenstoffes unter einen vorgegebenen Grenzwert zu reduzieren. Dadurch werden beispielsweise technisch aufwendige Substitutionen an Einzelteilen vermieden, bei denen das fragliche chemische Element im Gesamtvergleich vernachlässigbar gering ist.

Bei zusätzlicher Kenntnis, welche chemischen Elemente bzw. Werkstoffe sich vollständig bzw. teilweise recyceln und/oder wieder in den Produktionsprozeß einbringen lassen, läßt sich somit die Gesamtrezyklierfähigkeit des Produktes bestimmen.

Besonders vorteilhaft läßt sich das Verfahren und die Vorrichtung für Produkte der Kraftfahrzeugtechnik einsetzen, wobei das Produkt das Kraftfahrzeug selbst oder Teile davon sein kann.

Die Erfindung wird nachfolgend anhand eines bevorzugten Ausführungsbeispieles näher erläutert. Die Fig. zeigen:
- Fig. 1: eine Menüdarstellung eines Produktes mit einer Aufschlüsselung nach Material,
- Fig. 2: eine Menüdarstellung eines Produktes im Recycling-Menü,
- Fig. 3: eine Menüdarstellung im Simulationsmodus,
- Fig. 4: eine Grundmenüdarstellung im Suchmodus,
- Fig. 5a-d: Untermenüs im Suchmodus und
- Fig. 6: eine Darstellung eines Suchergebnisses.

In eine nicht dargestellte Datenverarbeitungseinrichtung werden zunächst alle Einzelteile unter Erhaltung ihrer Produkthierarchie eingegeben. Der Datensatz für jedes Einzelteil umfaßt dabei eine Teilenummer, eine Teilebezeichnung, das oder die Materialien und die Masse des Teils. Des weiteren wird zu jedem Material die VDA-Klassifizierung und die prozentuale Zusammensetzung der einzelnen vorhandenen chemischen Elemente eingegeben, die a priori bekannt sind.

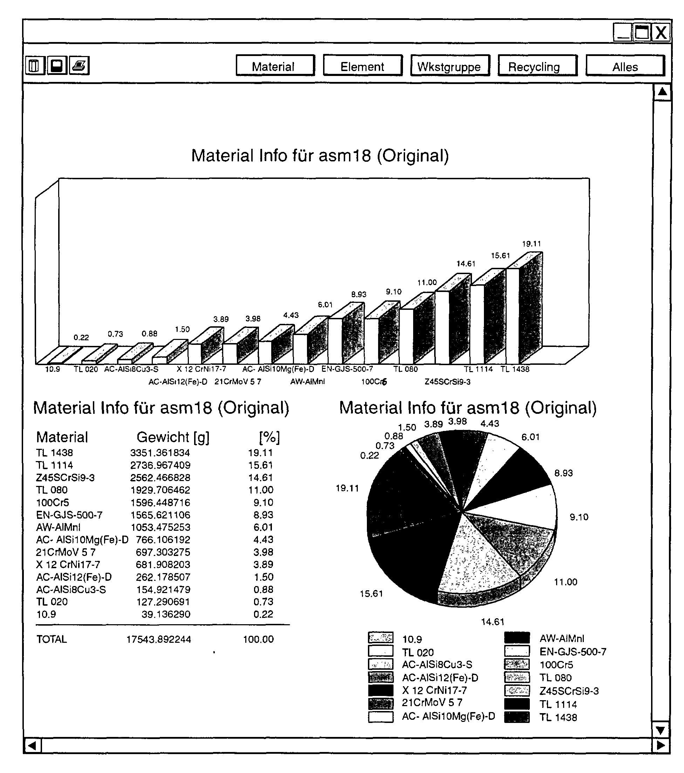

In der Fig. 1 ist eine Menüdarstellung gezeigt, in der ein Produkt mit der Bezeichnung asm 18 nach der Materialzusammensetzung aufgeschlüsselt ist. Die Aufschlüsselung erfolgt dabei einerseits mittels Balkendiagramm, Tortendiagramm und alphanumerischer Tabelle, wobei prinzipiell auch jeweils eine Darstellungsart ausreichend wäre. Wie der oberen Menüleiste entnehmbar ist, existieren im Informationsmodus fünf Einstellungen, nach denen ein Produkt aufgeschlüsselt werden kann, nämlich das Material, die darin enthaltenen chemischen Elemente, die darin enthaltenen VDA-Werkstoffgruppen, die Recyclebarkeit und eine Gesamtdarstellung, die alle vier zu vorgenannten Aufschlüsselungen gleichzeitig anzeigt.

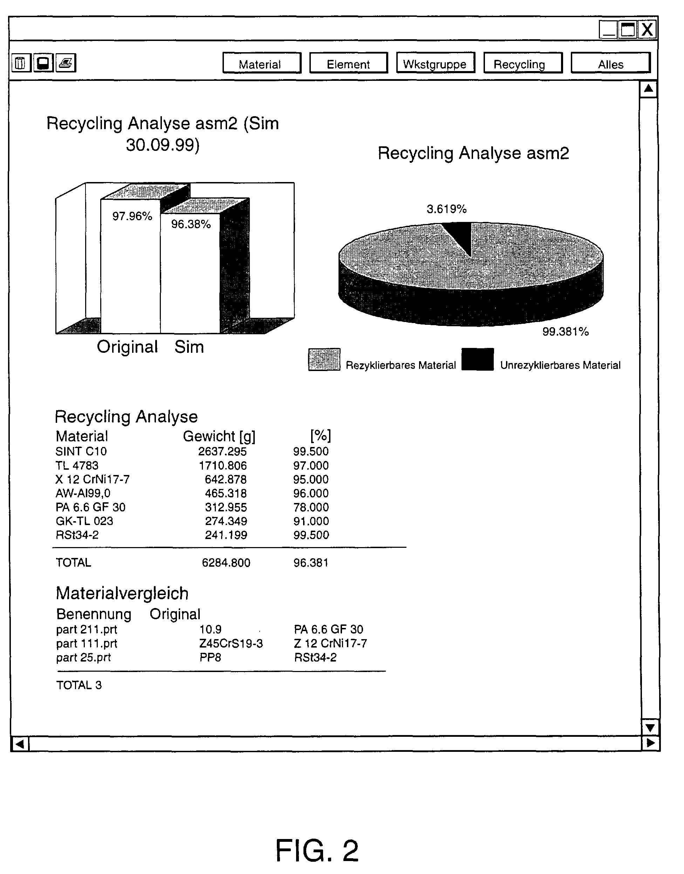

In der Fig. 2 ist die Recyclebarkeit eines Produktes asm2 in einer Original-Zusammensetzung und einer Simulation dargestellt. Dabei sind die beiden Recycling-Ergebnisse als Balkendiagramm nebeneinander dargestellt. Den Balkendiagrammen ist beispielsweise entnehmbar, daß das Produkt asm2 in der Original-Zusammensetzung zu 97,96% und in der veränderten Zusammensetzung zu 96,381% recyclebar ist. Das Ergebnis der veränderten Zusammensetzung ist zusätzlich noch als Tortendiagramm dargestellt. Des weiteren ist unter dem Balkendiagramm alphanumerisch dargestellt, welche Materialien mit welcher Masse in dem Produkt enthalten sind, wobei zusätzlich die prozentuale Recyclefähigkeit der einzelnen Materialien angegeben ist. Als Ergebnis ist beispielsweise der Tabelle entnehmbar, daß die Gesamtmasse des Produktes asm2 in der geänderten Zusammensetzung 6284,8 g beträgt, wovon 96,381% recyclebar sind. Unter der Tabelle ist der Materialvergleich dargestellt, wo die geänderten Materialien im Vergleich zur Original-Zusammensetzung dargestellt sind. Beispielsweise ist das Material des Einzelteils part211. prt von 10.9 in PA 6.6 GF 30 geändert worden.

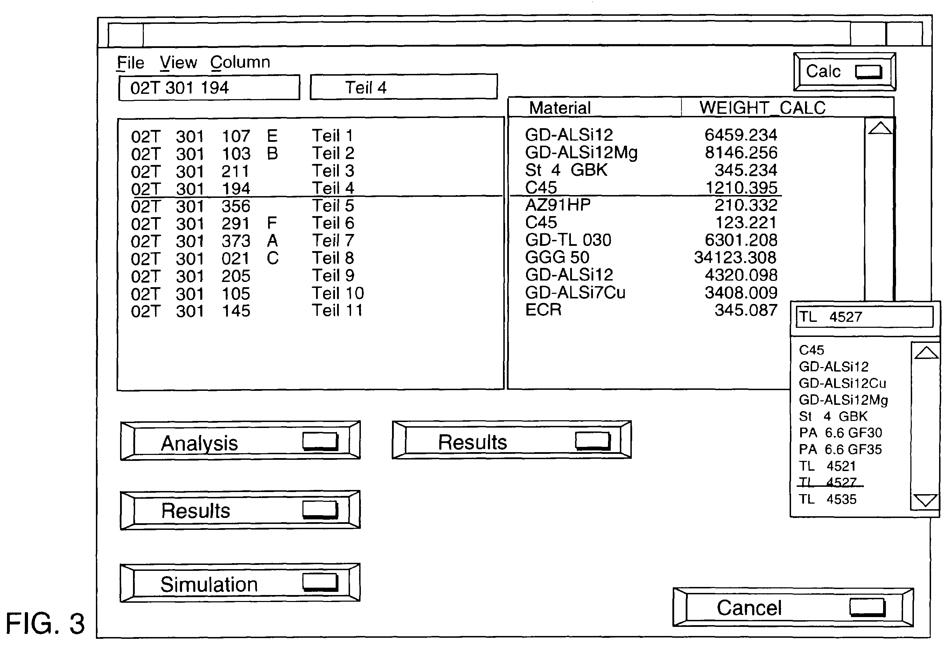

Das Grundmenü für die Simulation einer geänderten Materialzusammensetzung ist in Fig. 3 dargestellt. In einem ersten Anzeigefeld sind die verschiedenen Einzelteile eines Produktes mit ihrer Bauteilnummer und Benennung dargestellt. In einem zweiten Anzeigefeld sind die zugeordneten Materialien und die Masse dargestellt. Mittels eines Aktivierungselementes kann ein Einzelelement ausgewählt werden und dessen Material geändert werden. Im vorliegenden Beispiel ist das Einzelteil 4 selektiert, die in der Original-Zusammensetzung aus dem Material C45 besteht. Durch Betätigung des Feldes "Simulation" wird ein Untermenü aufgeblättert, in dem die möglichen alternativen Materialien zu C45 dargestellt sind. Aus dieser Liste kann dann mittels eines weiteren Aktivierungselementes ein alternatives Material ausgewählt werden. Im vorliegenden Beispiel soll das Material C45 durch TL 4527 ersetzt werden. Nachdem alle gewünschten Substitutionen durchgeführt wurden, kann durch Betätigung des Feldes "Calc." die Zusammensetzung des Produktes berechnet werden und analog Fig. 2 dargestellt werden. Somit kann das Produkt je nach Anforderungsprofil hinsichtlich Masse, Recyclebarkeit und/oder Anteil von Gefahrenstoffen optimiert werden.

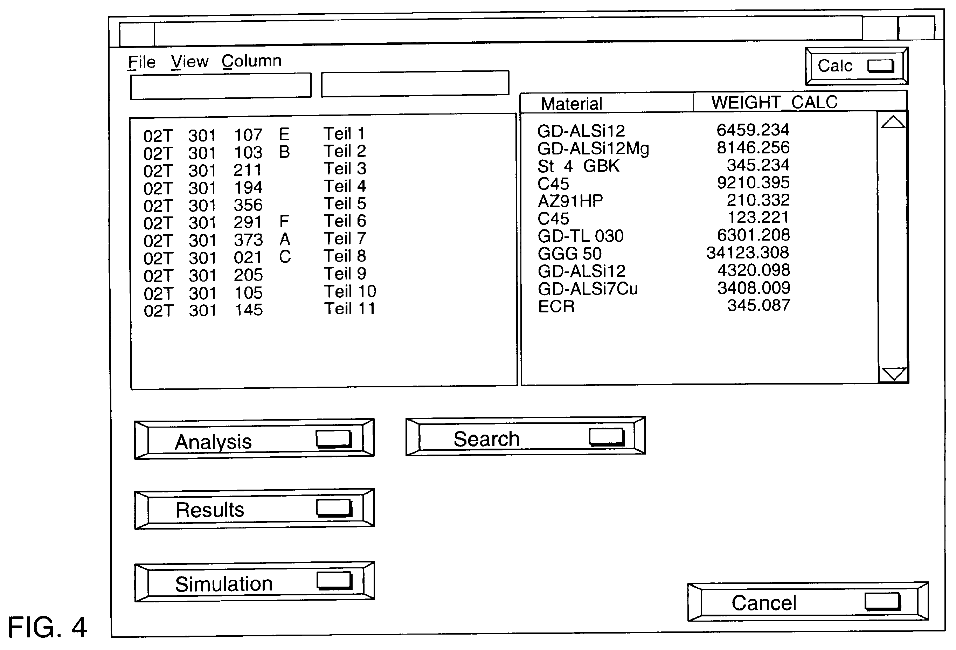

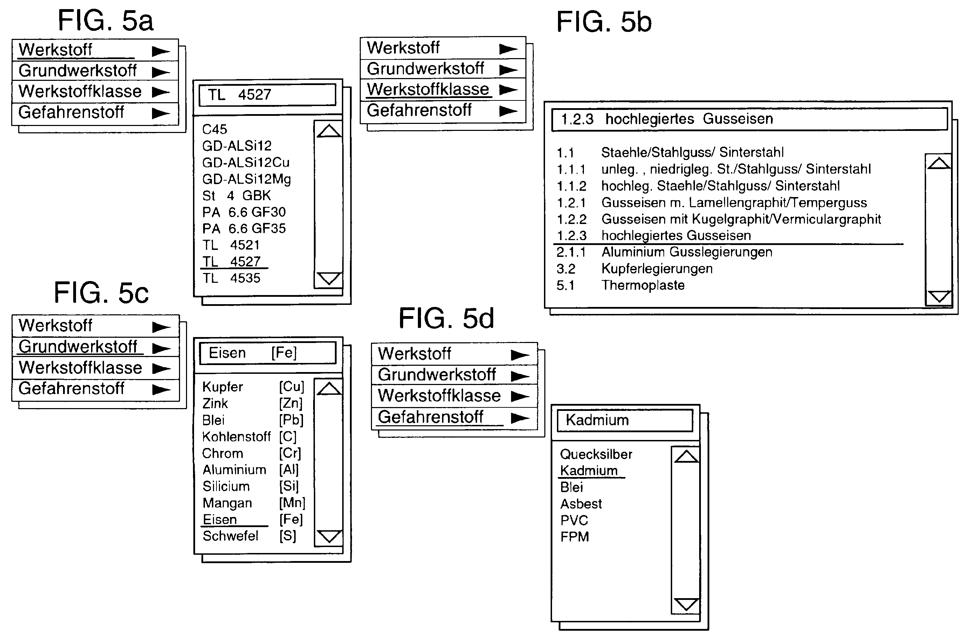

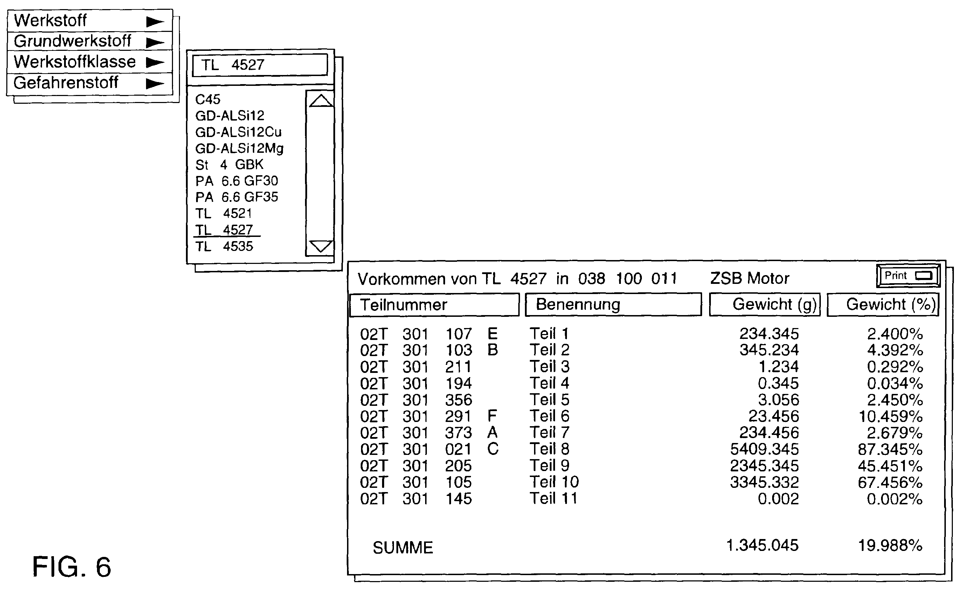

Des weiteren kann gezielt nach den Einzelteilen oder Produkten gesucht werden, in denen ein bestimmter Werkstoff, ein chemisches Element, eine Werkstoffklasse oder ein bestimmter Gefahrenstoff enthalten ist, wobei auch logische Verknüpfungen innerhalb einer Gruppe oder unter den Gruppen denkbar sind. Das Grundmenü für den Suchvorgang ist in Fig. 4 dargestellt, wobei in dem ersten Anzeigefeld wieder die Einzelteile eines Produktes mit deren Bauteilnummern und Bezeichnungen und im zweiten Anzeigefeld das Material und die Masse des Einzelteils dargestellt ist. Durch Betätigung des Feldes "Search" wird dann ein Untermenü eingeblendet, was in den Fig. 5a-d dargestellt ist. Dabei kann mittels eines Aktivierungselementes zwischen den Suchbegriffen "Werkstoff' (Material), "Grundwerkstoff" (Element), "Werkstoffklasse" oder "Gefahrenstoff" gewählt werden. Je nach Wahl wird ein entsprechendes weiteres Untermenü dargestellt, aus dem dann der gewünschte Suchbegriff ausgewählt werden kann. Ein beispielhaftes Suchergebnis für den "Werkstoff TL 4527" für die in Fig. 4 dargestellten Einzelteile ist in Fig. 6 dargestellt.

## Patentansprüche

1. Verfahren zur Handhabung von Daten eines Produktes, wobei das Produkt aus mehreren spezifisch geformten Einzelteilen besteht, wobei bei dem Verfahren die Daten über eine Einrichtung zur Eingabe von Daten in eine Verarbeitungseinrichtung eingegeben und in einer der elektronischen Verarbeitungseinrichtung zugeordneten Speichereinrichtungen abgelegt werden,
**dadurch gekennzeichnet, daß**
die Daten Informationen über die chemischen Elemente und/oder Verbindungen und/oder die spezifischen Eigenschaften der Einzelteile enthalten und in der Verarbeitungseinrichtung eine Summe der Informationen bezüglich des Produktes oder einer Untermenge von Einzelteilen hiervon ermittelt wird.

2. Verfahren nach Anspruch 1, dadurch gekennzeichnet, daß in der Verarbeitungseinrichtung der Anteil eines chemischen Elementes an dem Produkt und/oder an einer Untermenge von Einzelteilen ermittelt wird.

3. Verfahren nach Anspruch 1, dadurch gekennzeichnet, daß in der Verarbeitungseinrichtung die Einzelteile ermittelt werden, die mindestens ein definiertes chemisches Element enthalten.

4. Verfahren nach einem der Ansprüche 1 bis 3, dadurch gekennzeichnet, daß die Daten zusätzlich Informationen über die Masse und/oder das Volumen der Einzelteile enthalten.

5. Verfahren nach Anspruch 4, dadurch gekennzeichnet, daß die Masse eines definierten chemischen Elementes an dem Produkt und/oder an einer Untermenge von Einzelteilen ermittelt wird.

6. Verfahren nach einem der vorangehenden Ansprüche, dadurch gekennzeichnet, daß eine spezifische Eigenschaft des Einzelteils der Rezyklatanteil ist.

7. Verfahren nach einem der vorangehenden Ansprüche, dadurch gekennzeichnet, daß aus den Daten die Rezyklierfähigkeit des Produktes und/oder einer Untermenge an Einzelteilen hiervon ermittelt wird.

8. Verfahren nach einem der vorangehenden Ansprüche, dadurch gekennzeichnet, daß mittels der Daten die Einzelteile und/oder eine Untermenge von Einzelteilen gruppiert und/oder klassifiziert werden.

9. Verfahren nach einem der vorangehenden Ansprüche 1 bis 8, dadurch gekennzeichnet, daß die ermittelte Summe der Informationen mittels einer Anzeigeeinrichtung angezeigt wird.

10. Verfahren nach einem der vorangehenden Ansprüche 1 bis 9, dadurch gekennzeichnet, daß das Produkt ein Kraftfahrzeug oder ein Teil eines Kraftfahrzeuges ist.

11. Vorrichtung zur Handhabung von Daten eines Produktes, wobei das Produkt aus mehreren spezifisch geformten Einzelteilen besteht, welche mindestens eine elektronische Verarbeitungseinrichtung, eine Speichereinrichtung, eine Eingabeeinrichtung und eine Ausgabeeinrichtung umfaßt, dadurch gekennzeichnet, daß die Daten Informationen über die chemischen Elemente und/oder Verbindungen und/oder die spezifischen Eigenschaften der Einzelteile enthalten und die Verarbeitungseinrichtung derart ausgebildet ist, daß in der Verarbeitungseinrichtung eine Summe der Informationen bezüglich des Produktes oder einer Untermenge von Einzelteilen hiervon ermittelbar ist.

12. Vorrichtung nach Anspruch 11, dadurch gekennzeichnet, daß die Verarbeitungseinrichtung derart ausgebildet ist, daß in der Verarbeitungseinrichtung der Anteil eines chemischen Elementes an dem Produkt und/oder an einer Untermenge von Einzelteilen ermittelbar ist.

13. Vorrichtung nach Anspruch 11 oder 12, dadurch gekennzeichnet, daß die Verarbeitungeinrichtung derart ausgebildet ist, daß in der Verarbeitungseinrichtung die Einzelteile ermittelbar sind, die mindestens ein definiertes chemisches Element enthalten.

14. Vorrichtung nach einem der Ansprüche 11 bis 13, dadurch gekennzeichnet, daß die Daten zusätzlich Informationen über die Masse und/oder das Volumen der Einzelteile enthalten.

15. Vorrichtung nach Anspruch 14, dadurch gekennzeichnet, daß die Verarbeitungseinrichtung derart ausgebildet ist, daß in der Verarbeitungseinrichtung die Masse eines chemischen Elementes und/oder Verbindung und/oder der spezifischen Eigenschaft an dem Produkt und/oder an einer Untermenge von Einzelteilen ermittelbar ist.

16. Vorrichtung nach Anspruch 11 bis 15, dadurch gekennzeichnet, daß die Verarbeitungseinrichtung derart ausgebildet ist, daß in der Verarbeitungseinrichtung aus den Daten die Rezyklierfähigkeit des Produktes und/oder einer Untermenge an Einzelteilen hiervon ermittelbar ist.
